**Europäisches Patentamt**

**European Patent Office**

**Office européen des brevets**

(19)

(11) Publication number : **0 356 058 B1**

# (12) EUROPEAN PATENT SPECIFICATION

(45) Date of publication of patent specification :
**04.03.92 Bulletin 92/10**

(51) Int. Cl.⁵ : **B60C 15/024,** B60C 15/00

(21) Application number : **89308001.0**

(22) Date of filing : **07.08.89**

(54) **Heavy duty radial tyre.**

(30) Priority : **16.08.88 JP 204512/88**
**16.08.88 JP 204513/88**

(43) Date of publication of application :
**28.02.90 Bulletin 90/09**

(45) Publication of the grant of the patent :
**04.03.92 Bulletin 92/10**

(84) Designated Contracting States :
**DE FR GB**

(56) References cited :
**EP-A- 0 129 675**
**EP-A- 0 323 208**
**FR-A- 1 127 632**
**FR-A- 2 383 030**
**FR-A- 2 483 854**
**US-A- 4 726 408**

(73) Proprietor : **SUMITOMO RUBBER INDUSTRIES**
**LIMITED**
**No. 1-1, Tsutsui-cho 1-chome**
**Chuo-ku Kobe-shi Hyogo 651 (JP)**

(72) Inventor : **Ueyoko, Kiyoshi**
**2-10-2 Fukaeminami Higashinari-ku**
**Osaka-shi Osaka-fu (JP)**
Inventor : **Nakagawa, Tsuneyuki**
**4-6-10 Kounancho Higashinada-ku**
**Kobe-shi Hyogo-ken (JP)**
Inventor : **Mizukoshi, Yasuyoshi**
**9 Oone Wakabayashi-higashicho**
**Toyota-shi Aichi-ken (JP)**

(74) Representative : **Stewart, Charles Geoffrey**
**SP TYRES UK LIMITED Tyre Technical**
**Division**
**Fort Dunlop Birmingham B24 9QT (GB)**

## Description

The present invention relates to a heavy duty radial tyre, and more particularly to airplane radial tyres.

In radial ply tyres used in severe conditions such as high internal pressure, heavy load and high speed, and is, in heavy duty radial ply tyres, a higher durability is required in comparison with other types of tyres. The bead portion of such tyres is apt to be broken beginning from the turned up end of the carcass ply or the vicinity thereof due to the stress accompanying the bending deformation of the bead portion caused by heavy loads at takeoff and landing.

So far, to reinforce the bead portions it has been normal to increase the hardness of the bead apex, to increase the volume of the bead apex, and to add a cord reinforcing layer.

However, if these means are employed, it becomes very difficult to keep the generated heat at a sufficiently low level, to lower the repeating stress, and to prevent ply separation, which thus increases the occurrence of bead damage.

Moreover, when the tyre is used at a high speed, for example over 300 km/h, a standing wave is apt to be generated which causes in the bead portions complicated deformations, and as a result, the durability of the bead portions is significantly lowered.

It is, therefore, an object of the present invention to provide a heavy duty radial tyre improved in bead durability under such severe conditions.

In EP-A-0323208 (published on 05.07.89 and cited under Art. 54(3)EPC) is disclosed a heavy duty radial tyre comprising a pair of bead cores disposed one in each bead of the tyre; a carcass composed of at least one ply of organic fibre cords arranged radially at an angle of 90 to 75 degrees to the equatorial plane of the tyre extending between the beads and turned up around the bead cores from the axially inside to the outside thereof to form two turned up portions, an annular tread disposed radially outside the carcass; and a breaker composed of at least two plies of cords disposed between the tread and the carcass, wherein the bottom face of each bead is tapered axially inward to decrease the diameter thereof, and in the condition where the tyre is mounted on its regular rim and inflated to its regular pressure, the bead core in each bead is positioned to satisfy the following conditions: the axial distance X of the axially inner edge Q2 of the bead core from a bead heel Q1 defined as the intersection between a rim base line B and an extending line of the inner surface of a rim flange of the rim is not less than 80% and not more than 105% of the height HR of the radially outer edge Q3 of the rim flange from the rim base line; and the radial distance Y of the radially outer edge Q4 of the bead core measured radially inwardly from the radially outer edge Q3 of the rim flange being not less than 0% and not more than 30% of the height HR of the rim flange from the rim base line.

The above mentioned object is achieved by the features recited in claim 1.

An embodiment of the present invention will now be explained in detail referring to the drawings, in which:

Figure 1 is a sectional view of the right half of an aircraft tyre showing an embodiment of the present invention;

Figure 2 is a detailed view of a bead thereof mounted on a regular rim and inflated to the regular pressure, but not under load;

Figure 3 is a sectional view of the bead in a free state of being not mounted on any rim;

Figure 4 is a graph showing the relationship between bead temperature and bead core position;

Figure 5 is a graph showing the relationship between tyre durability and the bead core position;

Figure 6 is an enlarged sectional view showing a carcass ply;

Figure 7 is a graph showing the characteristic of an organic fibre cord for the carcass cord; and

Figure 8 is a sketch showing the deformation of a tyre.

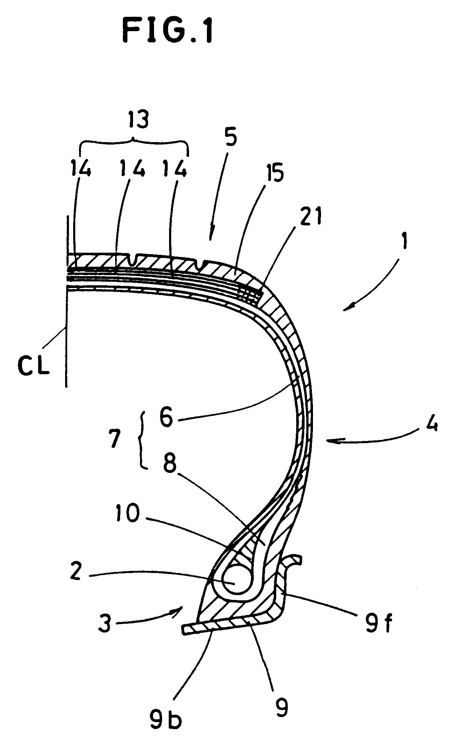

In Figure 1 a tyre 1 has a pair of bead portions 3, a pair of sidewall portions 4 and a tread portion 5. The tyre also comprises a pair of bead cores 2 disposed one in each of the bead portions 3, a carcass layer 7 extending between the bead portions and turned up around each bead core 2 from the axially inside to the outside thereof to form two carcass turned up portions 8 and a toroidal carcass main portion 6. A pair of bead apexes 10 are disposed one between the carcass main portion 6 and each of the carcass turned up portions 8.

An annular rubber tread 15 is disposed radially outside the carcass and is reinforced by a breaker 13 diposed between the carcass and the tread. The breaker 13 is composed of at least two plies 14 of parallel breaker cords arranged at 0 to 30 degrees to the equatorial plane CL of the tyre so that the at least two plies cross one another. In this embodiment, the breaker is composed of four plies of rubberised parallel organic fibre cords 21 arranged at 0 to 20 degrees with respect to the equatorial plane CL, which organic fibre cord has nearly the same characteristics as the organic fibre cord used for the carcass.

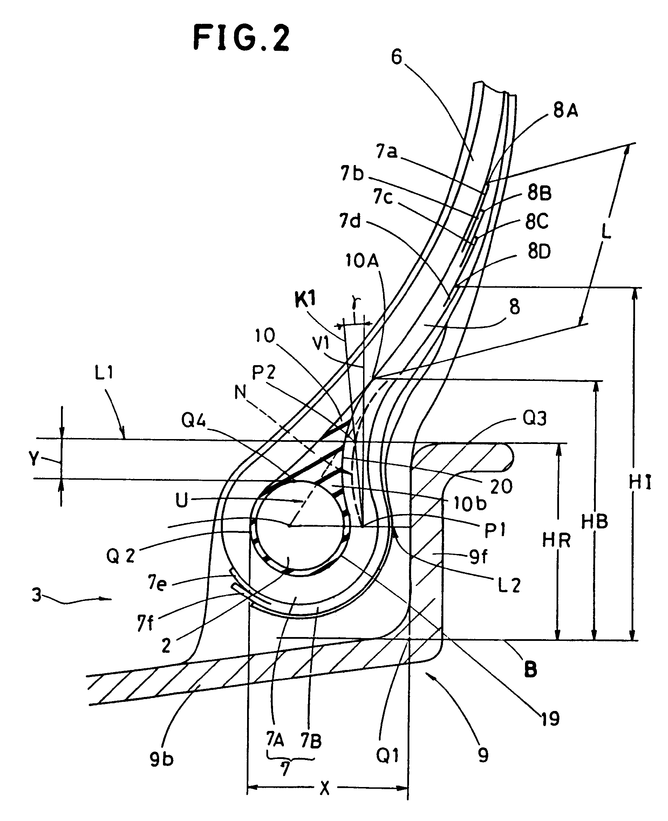

The bead cores 2 have a circular sectional shape as shown in Figure 2, and their position is defined relatively to the rim 9 to which the tyre is fitted and inflated to its standard design pressure as follows;

1. The ratio X/HR of the axial distance X between a bead heel point Q1 and the axially inner end Q2 of the bead core 2 to the height HR of a rim flange 9f is not less than 0.8 and not more than 1.05 wherein the bead heel point Q1 is the intersection of a bead base line, that is a rim base line B with the extended line of the inner surface of the rim flange 9f, and the height HR of the rim flange 9f is the radial distance between the rim base line B and the upper edge Q3 of the rim flange 9f.

2. The radially outer edge Q4 of the bead core is located radially inside the upper end Q3 of the rim flange 9f; and the ratio Y/HR of the radial distance Y measured inwardly from Q3 to Q4 to the height HR of the rim flange 9f is not less than 0 and not more than 0.3.

As to the sectional shape of the bead core 2, it can be formed in a hexagonal shape and a rectangular shape in addition to the circular sectional shape.

The bead apex 10 is made of a relatively hard rubber and has a triangular section, and it fills the space between the carcass main portion 6 and the carcass turned up portion 8. The bead apex rubber has a JIS A hardness of 65 to 90.

The bead apex 10 extends radially outwardly and taperingly from the bead core 2 over the rim flange 9f. That is, the height HB of the radially outer edge 10A thereof is larger than the height HR of the rim flange.

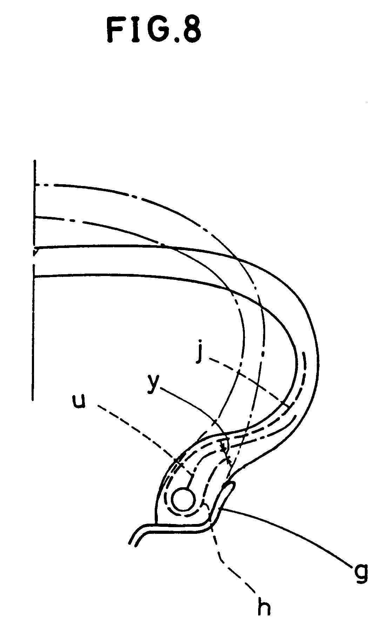

When such a heavy duty radial tyre is greatly deformed during running as shown in Figure 8, a part of the bead portion radially outwards of the upper edge of the rim flange 9f is repeatedly subjected to large outward bending deformation, which generates heat in that portion. This heat generation is greatest at the hard rubber bead apex. It is therefore possible to reduce the deformation of the bead apex, and so the resultant heat generation by reducing the thickness thereof and pre-forming it with a shape close to the deformed shape when under load.

Further, the relative positions of the bead core 2 to the rim 9 determine the approximate form of the base part 10b of the bead apex 10 which is where deformation and thus heat generation begin.

The invention by settling the above-mentioned ratios X/HR and Y/HR in the particular ranges stated above and having the bead apex 10 pre-formed close to the loaded shape, reduces substantially the deformation ant thus heat generation can be prevented.

As explained above, the ratio X/HR should be not less than 0.80 and more preferably not less than 0.85. If it is less than 0.80, the deformation and heat can not be inhibited. When the ratio X/HR becomes larger than 1.05, the volume of the bead portion 3 becomes excessive and the bead core 2 departs from the rim flange 9f too far so as to bring about adverse effects to the durability and the bead seating and tyre production becomes difficult. The ratio X/HR is preferably not more than 1.0.

Further, if the ratio Y/HR exceeds 0.30, it becomes difficult to achieve the object of the present invention. If it is less than 0, that is, the outer edge Q4 of the bead core 2 is located radially outside the outer edge Q3 of the rim flange. The bending of the carcass 7 is then concentrated on the outer edge Q4 of the bead core 2, which leads to the breakage of the carcass 7 itself.

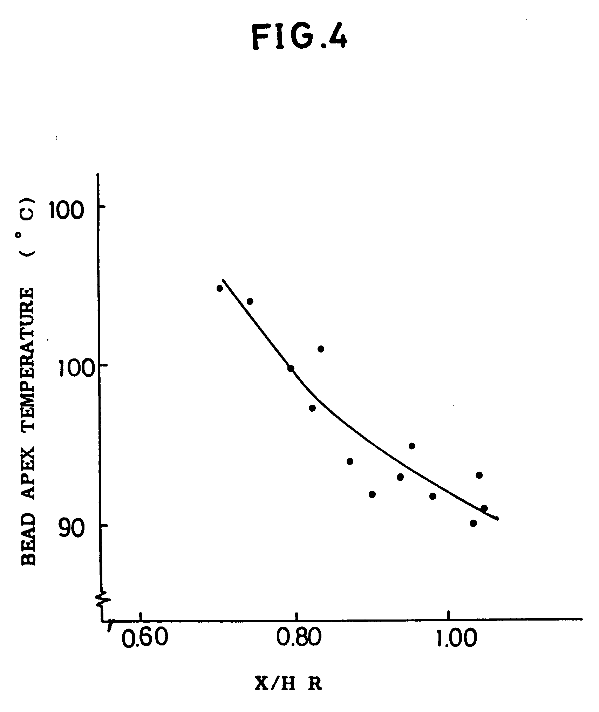

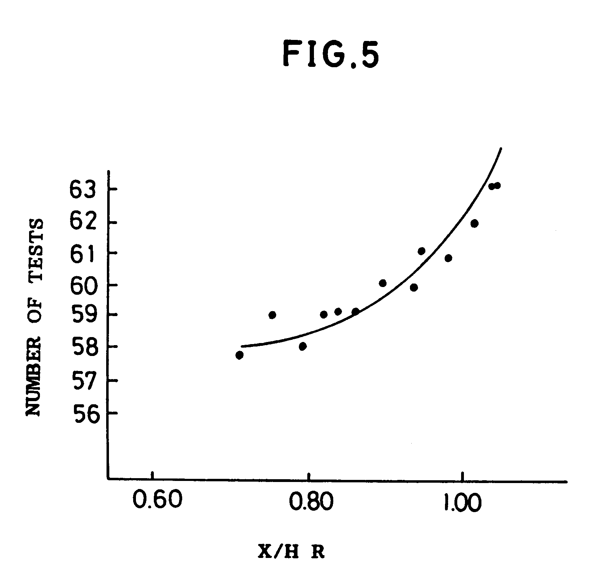

Figure 4 and Figure 5 show the results of repeated acceleration tests using an indoor bench testing machine. For the tests, with different values of X, several tyres of 46 x 17 R20 aircraft tyres were produced. Each test tyre was mounted on a standard rim of size 49 x 17 and inflated to 14.8 kg/sq.cm, and then repeatedly subjected to an acceleration test where the running speed was increased from 0 to 363 km/h in a period of 55 seconds under a load of 21 tons.

In Figure 4, the axis of abscissas shows the ratio X/HR, and the axis of ordinates shows the temperature in the bead apex measured immediately after the tyre was subjected to the acceleration tests ten times. This graph shows that the temperature of the bead apex decreases with increase of the ratio X/HR and that the temperature of the bead apex reaches 100 degrees Centrigrade when the ratio X/HR becomes less than 0.80.

In Figure 5, the axis of abscissas expresses the ratio X/HR, and the axis of ordinates indicates the number of times of the acceleration tests until damage was generated on the bead of the test tyres.

It was found out that, along with the increase of X/HR, the number of tests before damaged was increased and so the durability of the bead was improved.

Through the production of the test tyres, it was also shown that tyres in which X/HR exceeds 1.05 are difficult to produce, and that the bead seating on the rim base in such tyres is so bad that it is impossible to subject the tyre and rim assembly to the test.

It was also clarified in a similar way that it is preferably for the ratio Y/HR to set in the above-mentioned range from 0 to 0.3.

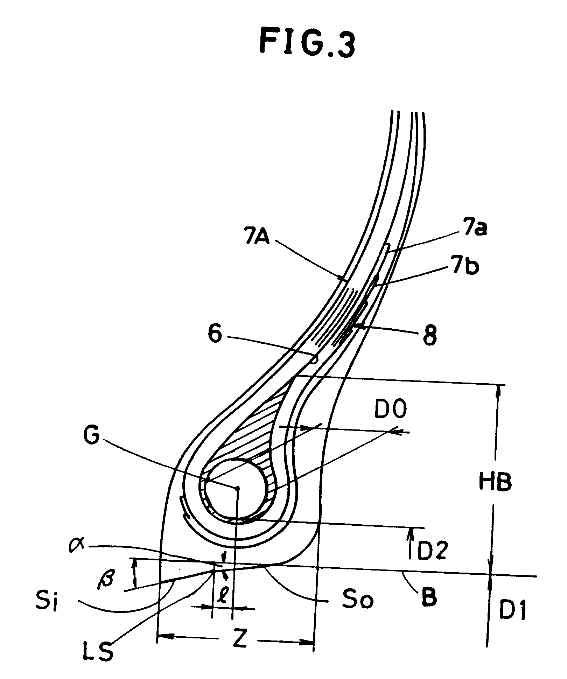

Turning now to the bead profile, the bottom face of the bead portion 3 is formed in a double taper shape as shown in Figure 3 although the bead seat on the rim base 9b of the rim 9 is formed in a single taper shape as shown in Figure 2. Thus when the tyre is not mounted on any rim, the bottom face comprises two inclined faces Si and So.

The axially inner face Si and the axially outer face So are inclined radially inwardly in the axially inward direction so as to decrease the diameter.

With respect to the axis of the tyre, the inclination angle (beta) of the inner face Si is larger than the inclination angle (alpha) of the outer face So which is designed according to the inclination angle of the bead seat of the rim.

Further, the intersection LS between the inner and outer faces Si, So is located inside the centre of gravity G of the bead core 2 in the axial direction of the tyre, and the distance 1 is preferably in the range of 10 to 30% of the sectional diameter DO of the bead core.

The bead bottom face formed in such a double taper shape helps to increase the critical speed of the standing wave generation.

Radial tyres for heavy loads and high speeds, especially those for airplanes, should be designed to endure a large radial deflection under load, for example, 28 to 40% in order to withstand shocks at takeoff and landing.

Under such conditions, if the running speed is increased over the critical speed for a standing wave then a standing wave will be easily generated.

If a standing wave is generated, the durability of the tyre is easily lost not only in the tread portion but also in the bead portions. Accordingly, it is very important for this type of tyre to effectively suppress the generation of a standing wave.

The critical speed is given by the following well known equation:

$$\overline{Vc} = \frac{T}{m} + 2\frac{EI\,K}{m}$$

where
Vc : critical speed of standing wave generation,
m : mass of tread per unit length;
EI : inner flexual rigidity of the tyre on the tread,
T : belt tensile force, and
k : spring constant of the carcass.

This equation shows that, in order to raise the critical speed Vc of standing wave generation, it is sufficient to increase the belt tensile force T and the spring constant K of the carcass.

On the other hand, in a tyre vulcanising process, the inside of the raw tyre (green cover) is pressurised strongly, and a tensile force is generated in the carcass ply. Accordingly, if the bead cores are shifted by the tensile force with a resultant decrease in the tension of the carcass cords, the spring constant of the carcass is lowered. As a result, the critical speed Vc is also lowered.

Thus, in order to raise the speed Vc, it is preferably to increase the value of the spring constant K by setting the length of the carcass between the bead cores 2 smaller in the state of green cover before vulcanisation than that in the state of the finished tyre after the vulcanisation to further increase the tensile force applied to the carcass cords by the vulcanising process.

However, if this method is employed, because of this increased tensile force in the carcass cords, the bead core tends to be moved axially outwardly, and the above-mentioned axial distance X becomes short. Incidentally it becomes difficult to keep the ratio X/HR in the above-mentioned range of 0.80 to 1.05.

By forming the bead bottom face in a double taper shape, the bead core is prevented from moving axially outwardly and thus changing the ratios X/HR and Y/HR. Therefore, the tensile force T of the belt and spring constant K of the carcass arc increased, and the critical speed of standing waves is raised thereby improving bead durability. Further, in such typres, where the bead cores are shifted axially outwardly as explained above, after the tyre has been repeatedly subjected to large deflections under a heavy load and high speed conditions, it was sometimes observed that the bead portion was permanently deformed in the toe portion such that the bottom surface of the toe portion inclined radially outwardly, which worsens the bead seating. By forming the bead bottom face in a double taper shape, this problem can also be solved.

Therefore, the tyre 1 is produced by using the above method to prevent the generation of a standing wave, and the bottom face of each bead thereof is formed in the double tapered shape as stated above by designing the tyre mould to give this shape.

Besides, as shown in Figure 3, the ratio Z/HR of the base width Z of the bead to the rim flange height HR is preferably set in a range from 1.05 to 1.50.

When the ratio Z/HR is smaller than 1.05, the ratio X/HR is very difficult to be made not less than 0.80. Also if Z/HR is larger than 1.50, the volume of the bead becomes so large as to increase the amount of the generated heat.

Further, from the viewpoint of the stability and durability of the bead and the rim assembly, it is preferably to satisfy the following conditions:
$$1.03 \leqq D1/D2 \leqq 1.08$$
$$1.50 \leqq X/DO \leqq 2.0$$
$$0.37 \leqq DO/Z \leqq 0.45$$
where
D1 is the diameter at the bead base line B,
D2 is the inner diameter of the bead core; and
D0 is the cross section diameter of the bead core.

The bead portion in this embodiment is, furthermore, provided with a thin hard rubber bead filler 19 between the inner surface of the carcass and the bead core to prevent abrasion of the carcass when it is moved around the bead core like a belt on a pulley by repeated deformations of the tyre.

The carcass 7 in this embodiment comprises an inner carcass ply layer 7A turned up around the bead core from the inner side to the outer side of the tyre, and an outer carcass ply layer 7B turned up around the bead core from the outer side to the inner side of the tyre so as to cover the outside of the turned up portion of the inner layer 7A. The inner layer 7A is composed of a plurality of plies of organic fibre cords, in this example four plies 7a, 7b, 7c and 7d, and the outer layer 7B is also composed of a plurality of plies of organic fibre cords, in this example two plies 7e, 7f.

The carcass cords are laid radially at 75 to 90 degrees to the equator of the tyre, and the carcass plies are alternately inclined with respect to the radial direction of the tyre so that each ply crosses the next ply.

The innermost carcass ply 7a with respect to the centre of the bead core, that is, the carcass ply adjacent to the bead core 2 contacts directly the carcass main portion 6 in the region L from the radially outer end 8A, and the radially outer ends 8B, 8C, 8D of the remaining carcass plies 7b, 7c, 7d in the inner layer 7A are terminated in this contacting region L as shown in Figure 2.

The width of the contacting region L in the radial direction of the tyre is 10 to 20% of the section height of the tyre from bead base line B.

When the bead receives a bending deformation as shown in Figure 8, a tensile stress is generated inwards thereof, and a compressive stress is generated outwards thereof, and accordingly a neutral line u exists therebetween. On the radially outside of the rim flange g, this neutral line u is formed near the carcass main portion j, and a compressive stress is applied to the upper end of the turned up portion h of the carcass ply, which leads to breakage, and this stress is in proportion to the distance y to the neutral line u.

Consequently, by disposing the radially outer ends 8A to 8D of the carcass plies in the contacting region L, the stress added thereto is effectively minimised.

The heights of the carcass plies 7a, 7b, 7c and 7d are arranged so that the heights become lower for axially outer plies. The height H1 of the lowest end 8D of the carcass ply 7d is larger than the height HB of the top 10A of the bead apex 10, and the height of the highest end 8A of the innermost carcass ply 7a is smaller than 50% of the section height of the tyre from the bead base.

Accordingly, the height HB of the bead apex 10 is higher than the height HR of the rim flange and lower than the height HI of the lowest turned up portion of the carcass ply.

On the other hand, the plies 7e, 7f of the outer layer 7B are terminated radially inwardly of the bead core.

In this way, by forming the turned up portion 8 of the carcass in the structure stated above, and defining the height of the bead apex 10, the strain produced by deformation in the turned up portion 8 is minimised and separation generated from the edge of the turned up portion 8 is prevented.

In addition, by extending along the curvature 20 provided on the axially outside of the bead apex 10, the turned up portion 8 of the carcass is curved axially inwardly such that the mid-thickness line N of the carcass turned up portion passes through axially inside a straight line P1-P2 drawn between two points P1 and P2, wherein the point P1 is the intersection between the mid-thickness line N and a straight line L2 drawn from the centre of gravity G of the bead core in parallel to the axial direction of the tyre, and the point P2 is the intersection between a straight line L1 drawn in parallel to the axial direction of the tyre from the upper edge Q3 of the rim flange 9f and a straight line K1 drawn from the point P1 at an axially inward inclination of angle (gamma) of 0 to 20 degrees with respect to the radial line V1. In this embodiment, the line N passes through the point P2.

As a consequence, the distance of the turned up portion 8 of the carcass 7 from the neutral stress line U is decreased in the range between the points P1 and P2, and this decrease leads to a decrease in the stress, especially the compressive stress generated on the outer carcass plies by deformation of the carcass, thereby improving the resistance to fatigue of the carcass. Further, the curved shape of the turned up portion is similar to that when deflected, which also decreases the stress.

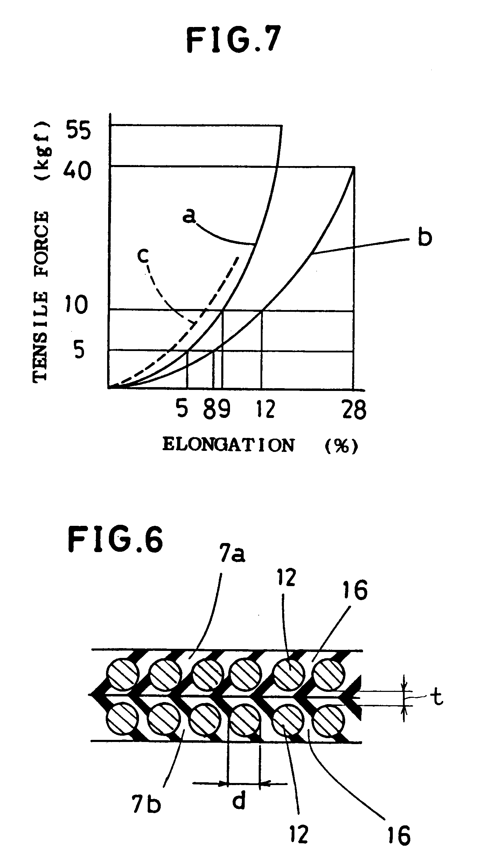

The carcass plies are composed of organic fibre cords 12 embedded in rubber 16 as shown in Figure 6.

The organic fibre cord 12 has elastic characteristics such that the elongation when loaded by 5 kgf is 5 to 8%, the elongation when loaded by 10 kgf is 9 to 12%, and the strength is 140 to 170 kgf/sq.mm. In Figure 7 such organic fibre cord is sandwiched between lines a and b. Incidentally, the breaking load of the cord shown by the line a was about 55 kgf, and that of the cord shown by the line b was about 40 kgf.

The organic fibre cord has the characteristic that the elongation rate becomes small as the load increases as shown typically by the curved lines a and b in Figure 7, and the elongation at breakage is not more than 28%.

As known from the values above, such an organic fibre cord gives an elongation of 10 to 11% in the range of 16% to 25% of its cord strength.

A conventional carcass cord shown by line c in Figure 7 has a large starting angle and a rectilinearity in comparison with the curve a.

For the organic fibre cord, nylon, polyester, aliphatic polyamide, carbon or metals can be used, but among them, an aliphatic polyamide fibre cord is preferably used because it can satisfy the above characteristics most effectively.

Also the above-mentioned characteristics can be obtained by reducing the tension in the so-called dip stretch process, in which tension and heat are applied to the cord for a specific period of time. The use of such cord make it possible to have an elongation of not less than 6% more preferable 8 to 9% to the carcass cords in the state when the tyre is inflated to its rated pressure. In this way by firstly giving a larger elongation than usual to the carcass cords, the compressive stress due to the bending of the bead at takeoff and landing is effectively reduced, and the carcass is prevented from local deformations and folding, and breakages due to fatigue caused by the compressive strain. In addition, the compressive stress on the bead rubber itself is reduced, which also improves the durability of the bead.

The thickness d of the organic fibre cord 12 is shown to be relatively small and is not more than 1.2mm.

For the topping rubber for the carcass ply, a high modulus rubber compound with a high durability is used. The properties are: a JIS A hardness of 80 to 90, a 100% modulus of 30 to 100 kfg/sq.cm, a strength of 150 to 300 kgf/sq.cm, and elongation at breakage of 300 to 600%.

The thickness t of the coating rubber layer 16 is not more than 0.8 mm as shown in Figure 6.

Because of the higher modulus, the carcass plies in the bead region, which form a strong triangulated construction with the turned up portions and main portions thereof, lessen the deformation of the bead under load, and the large elongation at breakage leads to increased durability of the bead. The coating of the organic fibre cord 12 with such a rubber allows easy extension of the organic fibre cords 12 and additional extension at the bead 3 in vulcanisation.

## Claims

1. A heavy duty radial tyre comprising a pair of bead cores (2) disposed one in each bead (3), a carcass composed of at least one ply (7) of organic fibre cords arranged radially at an angle of 90 to 75 degrees to the equatorial plane of the tyre, extending between the beads and turned up around the bead cores (2) from the axially inside to the outside thereof to form two turned up portions, an annular tread (5) disposed radially outside the carcass (b), and a breaker (13) composed of at least two plies (14) of cords disposed between the tread and the carcass, each bead (3) having a bottom face comprising an axially inner face Si and an axially outer face So each tapered axially inwardly to decrease the diameter of the bottom face, the taper in the inner face Si being greater than that of the outer face So, and the boundary (LS) between the inner face Si and the outer face So being located axially inwardly of the centre of gravity (G) of the bead core (2), and in the condition where the tyre is mounted on its regular rim and inflated to its regular pressure, the bead core (2) in each bead is positioned to satisfy the conditions that: the axial distance X of the axially inner edge Q2 of the bead core (2) from a bead heel Q1, defined as the intersection between a rim base line B and the extended line of the inner surface of the rim flange (9b) of the rim is not less than 80% and not more than 105% of the height HR of the radially outer edge Q3 of the rim flange (9b) from the rim base line (B); and the radial distance Y of the radially outer edge Q4 of the bead core (2) measured radially inwardly from the radially outer edge Q3 of the rim flange (9b) is not less than 0% and not more than 30% of height HR of the rim flange from the rim base line (B).

2. A tyre according to claim 1 characterised in that the innermost carcass ply (7a) adjacent to the bead core (2) contacts directly with the carcass main portion (b) in a region L having a width in the radial direction of the tyre of 10 to 20% of the section height of the tyre from the bead base line (B).

3. A tyre according to claim 2 characterised in that the turned up portion of at least one of the remaining plies terminates in the region L and the radially outer edge (8a) of the highest carcass ply turned up portion is located radially inwardly of half of the tyre section height.

4. A tyre according to any of claims 1 to 3 characterised in that the said carcass (6) comprises a plurality of plies, and the beads (3) are provided with bead apexes (10) one between the main portion (6) and each turned up portion of the carcass, and the radially outer edge of each bead apex (10) extends radially outwardly from the bead core (2) over the radially outer edge (Q3) of the rim flange (9b), but not over the radially outer edge (8D) of the lowest carcass ply turned up portion (7d).

5. A tyre according to any one of claims 2 to 5 characterised in that the turned up portion of the carcass (6) is curved axially inwardly such that the mid-thickness line N of the carcass turned up portion passes through axially inside a straight line P1-P2 drawn between two points P1 and P2, wherein the point P1 is the intersection between the mid-thickness line N and a straight line L2 drawn from the centre of gravity G of the bead core (2) parallel to the axial direction of the tyre, and the point P2 is the intersection between a straight line L1 drawn parallel to the axial direction of the tyre from the upper edge (Q3) of the rim flange (9f) and a straight line K1 drawn from the point P1 inclining axially inwardly at an angle (α) of 0 to 20 degrees with respect to the radial line V1.

6. A tyre according to any one of claims 1 to 6 characterised in that the carcass cords are aliphatic polyamide cords.

7. A tyre according to claim 7 characterised in that each carcass cord has the elastic characteristics that the elongation under 5 kp load is 5 to 8%, the elongation under 10 kp load is 9 to 12%, and the elongation at break is not more than 28%.

8. A tyre according to claim 7 characterised in that the carcass cords are embedded in a rubber having a 100% modulus of 80 to 100 kp/cm².

9. A tyre according to claim 8 characterised in that the thickness of each carcass cord is not more than 1.2mm.

## Patentansprüche

1. Radialreifen für hohe Beanspruchung, welcher umfaßt ein Paar von jeweils einzeln in jedem Wulst (3) angeordneten Wulstkernen (2), eine Karkasse, die aus mindestens einer Lage (7) von radial mit einem Winkel von 90 bis 75° zur Äquatorialebene des Reifens angeordneten organischen Faserkorden zusammengesetzt ist, sich zwischen den Wulsten erstreckt und um die Wulstkerne (2) von der axial inneren Seite zu der Außenseite derselben nach oben umgeschlagen ist, um zwei nach oben umgeschlagene Abschnitte zu bilden, einen ringförmigen radial außerhalb der karkasse (b) angeordneten Laufstreifen (5) und einen aus mindestens zwei Lagen (14) von Korden zusammengesetzten Gürtel (13), der zwischen dem Laufstreifen und der karkasse angeordnet ist, wobei jeder Wulst (3) eine Unterfläche besitzt, die eine axial inere Fläche Si und eine axial äußere Fläche So umfaßt, die jewells axial nach innen so schräg verlaufen, daß sie den Durchmesser der Unterfläche vermindern, wobei die Schräglage der inneren Fläche Si größer als die der äußeren Fläche So ist und die Grenze (LS) zwischen der inneren Fläche Si und der äußeren Fläche So axial innerhalb des Schwerpunkts (G) des Wulstkerns (2) angeordnet ist, und in dem Zustand, daß der Reifen an seiner regulären Felge angebracht und auf seinen regulären Druck aufgepumpt ist, der Wulstkern (2) in jedem Wulst so angeordnet ist, daß er die Bedingung erfüllt, daß: der Axialabstand X der axial inneren Kante Q2 des Wulstkerns (2) von einer Wulstferse Q1, die definiert ist als die Überschneidung zwischen einer Felgengrundlinie B und der weitergeführten Linie der Innenfläche des Felgenhorns (9b) der Felge, nicht weniger als 80% und nicht mehr als 105% der Höhe HR der radial äußeren Kante Q3 des Felgenhorns (9b) von der Felgengrundlinie (B) beträgt und der radiale Abstand Y der radial äußeren kante Q4 des Wulstkerns (2), gemessen radial nach innen von der radial äußeren Kante Q3 des Felgenhorns (9b), nicht weniger als 0% und nicht mehr als 30% der Höhe HR des Felgenhorns von der Felgengrundlinie (B) beträgt.

2. Reifen nach Anspruch 1, dadurch gekennzeichnet, daß die innerste Karkasslage (7a) benachbart zum Wulstkern (2) direkt mit dem Karkasshauptabschnitt (b) in einem Bereich L in Berührung steht, der in Radialrichtung des Reifens eine Breite von 10 bis 20% der Querschnittshöhe des Reifens von der Wulstgrundlinie (B) besitzt.

3. Reifen nach Anspruch 2, dadurch gekennzeichnet, daß der nach oben zurückgeschlagene Abschnitt mindestens einer der restlichen Lagen in dem Bereich L endet und die radial äußere Kante (8a) des höchsten Karkasslagen-Umschlagabschnitts radial innerhalb der Hälfte der Reifenquerschnittshöhe angeordnet ist.

4. Reifen nach einem der Ansprüche 1 bis 3, dadurch gekennzeichnet, daß die Karkasse (6) eine Vielzahl von Lagen umfaßt und die Wulste (3) mit Wulstreitern (10) versehen sind, die einzeln zwischen dem Hauptabschnitt (6) und jedem zurückgeschlagenen Abschnitt der Karkasse angeordnet sind, und die radial äußere Kante jedes Wulstreiters (10) sich radial von dem Wulstkern (2) über die radial äußere Kante (Q3) des Felgenhorns (9b) nach außen erstreckt, jedoch nicht über die radial äußere kante (8D) des untersten Karkasslagen-Rückschlagabschnitts (7d).

5. Reifen nach einem der Ansprüche 2 bis 5, dadurch gekennzeichnet, daß der zurückgeschlagene Abschnitt der karkasse (6) axial nach innen so gekrümmt ist, daß die Mitteldickenlinie N des Karkass-Rückschlagabschnitts axial innerhalb einer geraden Linie P1-P2 durchläuft, die zwischen zwei Punkten P1 und P2 gezogen ist, von denen der Punkt P1 der Schnittpunkt der Mitteldickenlinie N mit einer von dem Schwerpunkt G des Wulstkerns (2) parallel zur Axialrichtung des Reifens gezogenen geraden Linie L2 und der Punkt P2 der Schnittpunkt einer parallel zur Axialrichtung des Reifens von der oberen Kante (Q3) des Felgenhorns (9f) gezogenen geraden Linie L1 mit einer geraden Linie K1 ist, die von dem Punkt P1 mit einem Neigung nach innen mit einem Winkel ($\alpha$) von 0 bis 20° bezüglich der Radiallinie V1 gezogen ist

6. Reifen nach einem der Ansprüche 1 bis 6, dadurch gekennzeichnet, daß die Karkasskorde aliphatische Polyamidkorde sind.

7. Reifen nach Anspruch 7, dadurch gekennzeichnet, daß jeder Karkasskord die elastischen Charakteristiken besitzt, daß die Längung unter einer Last von 5kp 5 bis 8% beträgt, die Längung unter einer Last von 10 kp 9 bis 12% und die Bruchlängung nicht mehr als 28%.

8. Reifen nach Anspruch 7, dadurch gekennzeichnet, daß die karkasskorde in einem Kautschuk mit einem 100%-Modul von 80 bis 100 kp/cm² eingebettet sind.

9. Reifen nach Anspruch 8, dadurch gekennzeichnet, daß die Dicke jedes Karkasskordes nicht mehr als 1,2 mm beträgt.

**Revendications**

1. Pneumatique à carcasse radiale pour lourdes charges, comprenant une paire de tringles (2) disposées chacune dans un talon (3), une carcasse composée d'au moins une nappe (7) de câblés de fibres organiques disposés radialement et formant un angle de 90 à 75° avec le plan équatorial du pneumatique, la carcasse étant disposée entre les tringles et étant repliée autour des tringles (2) de la partie axialement interne vers la partie axialement externe en formant deux parties repliées, une bande annulaire de roulement (5) disposée radialement à l'extérieur de la carcasse (b), et une nappe sommet (13) composée d'au moins deux nappes (14) de câblés placées entre la bande de roulement et la carcasse, chaque talon (3) ayant une face inférieure comportant une face axialement interne Si et une face axialement externe So ayant chacune une dimension qui diminue axialement vers l'intérieur afin que le diamètre de la face inférieure diminue, l'inclinaison de la face interne Si étant supérieure à celle de la face externe So, et la limite (LS) entre la face interne Si et la face externe So se trouvant axialement vers l'intérieur par rapport au centre de gravité (G) de la tringle (2), et, lorsque le pneumatique est monté sur sa jante normale et est gonflé à sa pression normale, la tringle (2) de chaque talon est disposée afin qu'elle remplisse les conditions suivantes : la distance axiale X du bord axialement interne Q2 de la tringle (2) à un bout de talon Q1, défini par l'intersection d'une ligne B de base de jante et du prolongement de la surface interne du rebord (9b) de la jante, n'est pas inférieure à 80 % ni supérieure à 105 % de la hauteur HR du bord radialement externe Q3 du rebord (9b) de la jante par rapport à la ligne de base (B) de la jante, et la distance radiale Y du bord radialement externe Q4 de la tringle (2), mesurée radialement vers l'intérieur à partir du bord radialement externe Q3 du rebord (9b) de la jante, n'est pas inférieure à 0 % ni supérieure à 30 % de la hauteur HR du rebord de la jante par rapport à la ligne de base de jante (B).

2. Pneumatique selon la revendication 1, caractérisé en ce que la nappe (7a) de carcasse qui est la plus à l'intérieur et est adjacente à la tringle (2), est directement au contact de la partie principale (b) de carcasse dans la région L ayant une largeur, dans la direction radiale du pneumatique, de 10 à 20 % de la hauteur en coupe du pneumatique par rapport à la ligne de base de talon (B).

3. Pneumatique selon la revendication 2, caractérisé en ce que la partie repliée de l'une au moins des nappes restantes se termine dans la région L, et le bord radialement externe (8a) de la partie repliée la plus haute de nappe de carcasse se trouve radialement vers l'intérieur du milieu de la hauteur en coupe du pneumatique.

4. Pneumatique selon l'une quelconque des revendications 1 à 3, caractérisé en ce que la carcasse (6) comprend plusieurs nappes, et les talons (3) ont des pointes de bourrage (10) placées chacune entre la partie principale (6) et chaque partie repliée de la carcasse, et le bord radialement externe de chaque pointe de bourrage (10) de talon est disposé radialement vers l'extérieur à partir de la tringle (2) sur le bord radialement externe (Q3) du rebord de jante (9b), mais non sur le bord radialement externe (8D) de la partie repliée la plus basse (7d) de nappe de carcasse.

5. Pneumatique selon l'une quelconque des revendications 2 à 5, caractérisé en ce que la partie repliée de la carcasse (6) est courbée axialement vers l'intérieur afin que la ligne N placée au milieu de l'épaisseur de la partie repliée de carcasse passe axialement à l'intérieur d'une droite P1-P2 passant par les deux points P1 et P2, le point P1 étant l'intersection de l'axe N d'épaisseur médiane et d'une droite L2 passant par le centre de gravité G de la tringle (2) et parallèle à la direction axiale du pneumatique, le point P2 étant l'intersection d'une droite L1 partant du bord supérieur (Q3) du rebord (9f) de la jante et parallèle à la direction axiale du pneumatique et d'une droite K1 partant du point P1 et inclinée axialement vers l'intérieur suivant un angle (a) de 0 à 20° par rapport à l'axe radial V1.

6. Pneumatique selon l'une quelconque des revendications 1 à 6, caractérisé en ce que les câblés de la carcasse sont des câblés d'un polyamide aliphatique.

7. Pneumatique selon la revendication 6, caractérisé en ce que chaque câblé de carcasse a des caractéristiques élastiques telles qu'un allongement de 5 à 8 % sous une charge de 50 N (5 kp), un allongement de 9 à 12 % sous une charge de 100 N (10 kp), et un allongement à la rupture qui ne dépasse pas 28 %.

8. Pneumatique selon la revendication 7, caractérisé en ce que les câblés de la carcasse sont enrobés dans un caoutchouc ayant un module à 100 % compris entre $8.10^6$ et $1.10^7$ Pa (80 et 100 kp/cm²).

9. Pneumatique selon la revendication 8, caractérisé en ce que l'épaisseur de chaque câblé de la carcasse ne dépasse pas 1,2 mm.

# FIG.1

# FIG.2

# FIG.3

# FIG.4

# FIG.5

# FIG.7

# FIG.6

# FIG.8